Europäisches Patentamt

European Patent Office

Office européen des brevets

(19)

(11) Publication number: **0 296 354 B1**

(12) # EUROPEAN PATENT SPECIFICATION

(45) Date of publication of patent specification: **25.08.93**   (51) Int. Cl.⁵: **G01N 21/59**, G01N 21/61, G01N 21/00, G01N 21/37

(21) Application number: **88107883.6**

(22) Date of filing: **17.05.88**

(54) **Gas analyzer.**

(30) Priority: **13.06.87 JP 147528/87**

(43) Date of publication of application:
**28.12.88 Bulletin 88/52**

(45) Publication of the grant of the patent:
**25.08.93 Bulletin 93/34**

(84) Designated Contracting States:
**DE FR GB IT SE**

(56) References cited:
**AT-B- 376 301**
**US-A- 4 163 899**
**US-A- 4 256 964**

(73) Proprietor: **HORIBA, LTD.**
**2 Miyanohigashi-machi Kissyoin**
**Minami-ku Kyoto(JP)**

(72) Inventor: **Asano, Ichiro**
**330-470, Bodaiji Kousei-cho**
**Kouka-gun Shiga Prefecture(JP)**
Inventor: **Imaki, Takao**
**9-4, 1-Chome, Baba**
**Nagaokakyo-city Kyoto(JP)**

(74) Representative: **TER MEER - MÜLLER - STEIN-**
**MEISTER & PARTNER**
**Mauerkircherstrasse 45**
**D-81679 München (DE)**

EP 0 296 354 B1

## Description

The present invention relates to a gas analyzer used for measuring the concentration of a specific gas component (for example NO, CO and the like) in a sample gas. In particular, the invention relates to a gas analyzer adapted to pass a light beam emitted from a light source alternatingly and periodically through a reference gas and a sample gas, respectively, employing for example a cross flow method for supplying the reference gas and the sample gas or a method of chopping the light beam, said gas analyzer being provided with detector means for detecting light which passed through said reference gas and for light which passed through said sample gas, and being adapted to obtain from the output signal of said detector means an alternating current component corresponding to the difference between the energies of the radiation which passed through the reference gas and the radiation which passed through the sample gas, to determine the concentration (or in short the quantity) of the gas component to be measured which is contained in the sample gas, on the basis of the amplitude of said alternating current component.

A representative example of a precursory gas analyzer of this type is disclosed in the document US-A-4 256 964. In this gas analyzer, a cross flow method is adopted for introducing the sample gas and the reference gas (zero gas) alternatively at a predetermined frequency, which will be termed basic frequency hereinafter, into a gas-passing cell. A detector, such as a pneumatic detector (condenser microphone detector and the like), is disposed behind the gas-passing cell. This detector is capable of delivering an output signal which consists of an alternating current corresponding to the difference between the energies of the radiation which passed through the reference gas and the sample gas, respectively, and does not contain a direct current component. The frequency of the alternating current delivered by the detector corresponds to the abovementioned basic frequency, and the amplitude of said alternating current reflects the energy absorption of the gas component to be measured.

Recently, also a gas analyzer has become known, which employs a detector, such as a thermopile detector, for detecting the change of the absolute value of the energy of the radiation which passed through the gas-passing cell. The output signal from this detector has a shape in which an alternating current component corresponding to the energy absorption by the gas component to be measured is superposed to a direct current component corresponding to an appointed quantity of energy which passed through the reference gas. This output signal is treated to selectively detect the alternating current component.

However, both conventional gas analyzers described above inevitably generate a span drift due to changes of the light quantity resulting from changes of the voltage applied to the light source and of environmental temperature, the deterioration of the light source itself and the like, stain of a transmission window of the gas-passing cell, changes of the sensitivity of the detector itself and the like.

Accordingly, several measures, such as providing means for stabilizing the voltage applied to the light source and means for maintaining the environmental temperature always constant, have been taken in order to reduce such a span drift as far as possible. In these cases, however, problems have occured in that the apparatus becomes remarkably large-sized and complicated as a whole. Further, a span drift due to changes of characteristics of the optical system resulting from other factors, such as deterioration of the light source itself, stain of the transmission window of the gas-passing cell and changes of the sensitivity of the detector itself, cannot be compensated by such measures, so that calibrating operations using a standard span gas must frequently be carried out. This is remarkably troublesome and uneconomical, since an increased quantity of span gas is consumed. This drawback becomes particularly notable in cases where a gas is to be measured for which a stabilized span gas is difficult to supply.

The present inventors have developed an art capable of solving the above described problems in connection with the above described gas analyzer of the latter type (in which a detector such as a thermopile detector is used for detecting the absolute value of the energy of radiation, and the alternating current component of the detector output signal is detected by signal treatment). This art is proposed in the Japanese patent application No. 222 326/1986 and in the US patent application No. 089 131 filed on August 25, 1987.

According to this art, the direct current component corresponding to an appointed optical energy which passed through the reference gas is derived from the output signal of the detector in addition to the alternating current component corresponding to the energy absorption by the gas component to be measured, and correcting means responsive to the direct current component are provided for compensating influences from characteristics of the optical system, such as the light quantity of the light source, the transmissivity of the transmission window of the gas-passing cell and the sensitivity of the detector, which are included commonly and equally (at the same ratio) in said alternating current component and said direct current component. For example, the correcting means are adapted to divide the amplitude of the alternating current component by the direct current component. In this way, it is possible to surely and effectively eliminate the influence of said various kinds of span-drift causing factors upon the amplitude of the alternating current component which is to be measured properly.

However, although the above described solution can be effectively applied to gas analyzers of the latter type (in which the detector signal is a superposition of a direct current component and an alternating current component), it cannot be applied to the gas analyzer of the former type (in which the detector, e.g. a pneumatic detector, delivers a signal comprising merely an alternating current corresponding to the amount of energy absorption by the gas component to be measured). Accordingly, the above described various kinds of problem have not been solved yet for a gas analyzer of the former type.

US-A-4 163 899 discloses a gas analyzer of the type in which no reference gas is used and, instead, the density of the sample gas within the sample cell is varied. In this gas analyzer, the intensity of the light is modulated at a first frequency and the density of the sample gas is varied at a second frequency to correctly enable the detection of the selected gas in the gas sample.

It is an object of the present invention to provide an art of effectively compensating all kind of span drifts due to the various factors mentioned before, which art is applicable to every type of gas analyzer with the above-mentioned general construction, merely by adding a remarkably simple structure, without requiring large-scaled means for stabilizing the voltage applied to the light source and maintaining the environmental temperature always constant and without frequently carrying out uneconomical and troublesome calibrating operations using a standard span gas.

According to the invention, this object is achieved by providing a gas analyzer having the features specified in claim 1.

In a gas analyzer embodying the invention, the strength of light emitted by the light source is intendedly modulated at a frequency which is different from the basic frequency at which the light beam is alternatingly caused to pass through the reference gas and the sample gas. Accordingly, the output signal from the detector includes a superposition of two alternating current components one of which has the modulation frequency and reflects the changes of the intensity of the light beam while the other has the basic frequency and reflects the energy absorption by the gas component to be measured. This latter alternating current component thus includes the information on the abundance of the gas component to be measured in the sample gas and forms the signal to be measured properly. In a signal treatment circuit, both alternating current components are separately detected from the output of the detector and are rectified to form a first rectification signal representing the amplitude of the alternating current component having the basic frequency and a second rectification signal representing the amplitude of the alternating current component having the modulation frequency. The signal treatment circuit further includes correction means for correcting the first rectification signal on the basis of the second rectification signal, thereby eliminating the influences from the characteristics of the optical system, such as the light efficiency of the light source, the transmissivity of the transmission window of the gas-passing cell and the sensitivity of the detector.

Preferably, the correction means are adapted to divide the first rectification signal by the second rectification signal. This correction process is based on the consideration that the abovementioned influences from the characteristics of the optical system tend to change the first and second rectification signals at the same ratio.

According to the invention, all of the span drifts resulting from various kinds of factor, such as the change of light quantity due to the change of voltage applied to the light source and of the environmental temperature, and the deterioration of the light source itself, stain of the transmission window of the gas-passing cell, and the change of the sensitivity of the detector itself, can always be surely and effectively compensated in high accuracy, without any need for frequently carrying out troublesome and uneconomical calibrating operations using the standard span gas. Further, there is no need for large-scaled means for stabilizing the voltage applied to the light source and maintaining the environmental temperature always constant. To achieve the object of the invention, it is only necessary to add to the conventional gas analyzer a remarkably simple structure for changing the strength of the light emitted from the light source and to provide said correction means in the internal signal treatment circuit. As a result, the gas analyzer according to the present invention can be manufactured very simply, compactly and inexpensively.

Moreover, since the light beam detected by the detector of the gas analyzer and consequently the output signal of said detector is modulated intendedly, the present invention is not only applicable to gas analyzers of the type using a detector, such as a thermopile detector, delivering a signal corresponding to the absolute value of the detected optical energy and having the form of a superposition of a direct current component and an alternating current component, but also to gas analyzers of a type using a detector such as a pneumatic detector delivering an output signal which merely comprises alternating current components.

More specific features of preferred embodiments of the gas analyzer according to the invention are indicated in the dependent claims.

Various preferred embodiments of the present invention will be described below with reference to the drawings, in which:

Fig. 1 is a general rough block diagram showing the basic constitution of a preferred embodiment;

Fig. 2 is a block circuit diagram showing a signal treatment circuit;

Fig. 3(a) is a diagram showing a detector output signal;

Fig. 3(b) is a diagram showing signals in different portions of the signal treatment circuit;

Fig. 4(a) is a general rough block diagram showing another preferred embodiment;

Fig. 4(b) is an enlarged front view of principal parts of the preferred embodiment shown in figure 4(a);

Fig. 5 is a block circuit diagram showing a signal treatment circuit;

Fig. 6 is a circuit diagram showing principal parts in another modification of the signal treatment circuit;

Fig. 7 is a general rough block diagram showing still another preferred embodiment;

Fig. 8 is a general rough block diagram showing still another preferred embodiment;

Fig. 9(a) is a general rough block diagram showing a modification of the embodiment shown in figure 8; and

Fig. 9(b) is an enlarged front view showing principal parts of the modified embodiment according to figure 9(a).

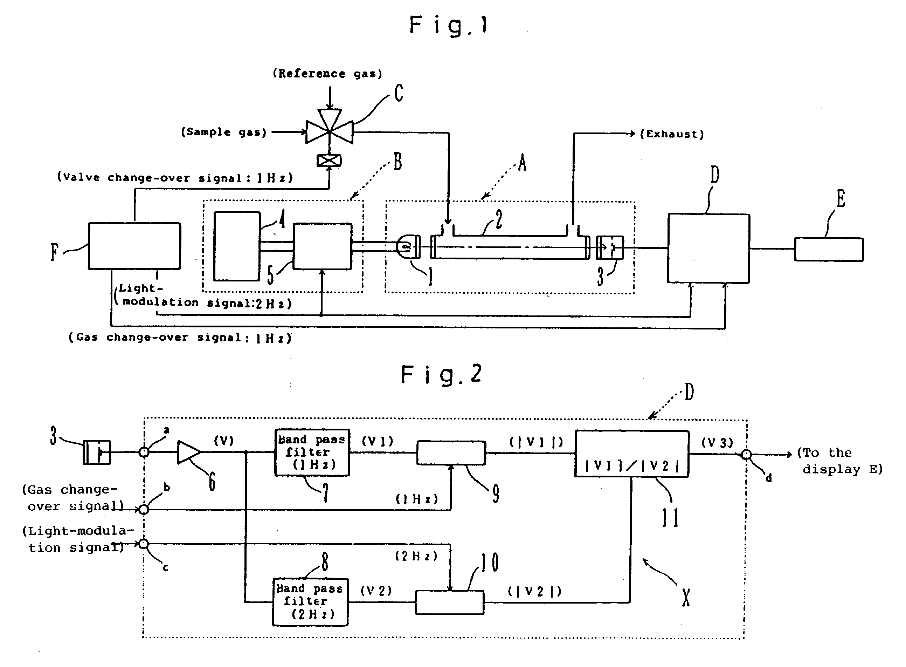

Figures 1 to 3 show a single-cell cross-flow type gas analyzer.

As is shown in figure 1, the gas analyzer generally comprises a detecting portion A for detecting the absorptivity of a sample gas as a measure of the abundance of an absorptive gas component contained in said sample gas, a power source circuit B for supplying an operating voltage to a light source 1 provided in said detecting portion A, a gas distributor C including for example a three-way change-over valve for alternately introducing the sample gas and a reference gas (usually a zero gas) into a gas-passing cell 2 provided in said detecting portion A, a signal treatment circuit D for treating an output from a detector 3 provided in said detecting portion A, a display E for displaying a value corresponding to the output signal from the signal treatment circuit D and representing the measured concentration of the gas component, and a controller F for delivering appointed control signals, such as a valve change-over signal, a gas change-over signal and a light modulation signal, to said power source circuit B, said gas distributer C and said signal treatment circuit D, respectively. The control signals are indicated by errows drawn in continuous lines in figure 1. In this preferred embodiment, the valve change-over signal and the gas change-over signal corresponding thereto have a frequency of 1 Hz, while the light modulation signal has a frequency of 2 Hz and is synchronized with said valve change-over signal and said gas change-over signal.

The detecting portion A comprises the light source 1 for emitting a measuring light (for example infrared rays), the gas-passing cell 2 into which the sample gas and the reference gas are alternately introduced at an appointed basic frequency (1 Hz in this preferred embodiment) by means of the gas distributor B, and the detector 3 (for example a pneumatic detector such as as condenser microphone detector) for detecting a difference between optical energies received in a case where the reference gas is introduced into the gas-passing cell 2 (substantially no absorption of optical energy) and a case where the sample gas is introduced into the gas-passing cell 2 (absorption of optical energy occurs) and outputting an alternating current signal which reflects the changes of optical energy. The light source 1, the gas-passing cell 2 and the detector 3 are disposed in this order along a straight line defining an optical path for the light emitted by the light source.

The power source circuit B comprises a constant-voltage power source 4 for energizing the light source 1 and a voltage-modulation circuit 5 for modulating the voltage from the constant-voltage power source 4 at a modulation frequency (2 Hz) other than said basic frequency (the change-over frequency of the sample gas and the reference gas: 1Hz) on the basis of the light-modulation signal received from the controller F.

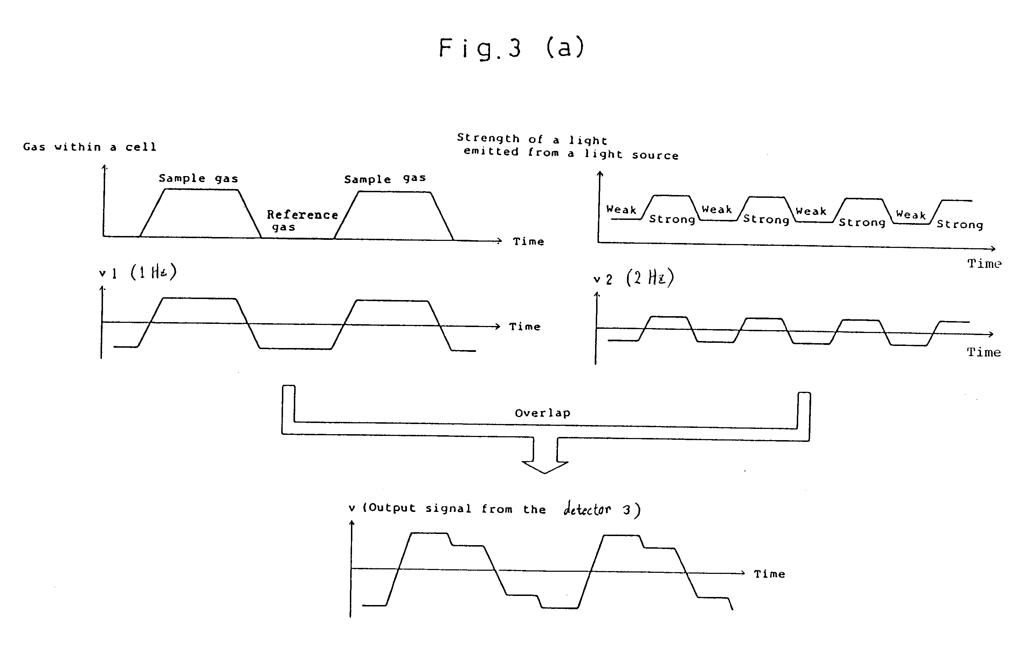

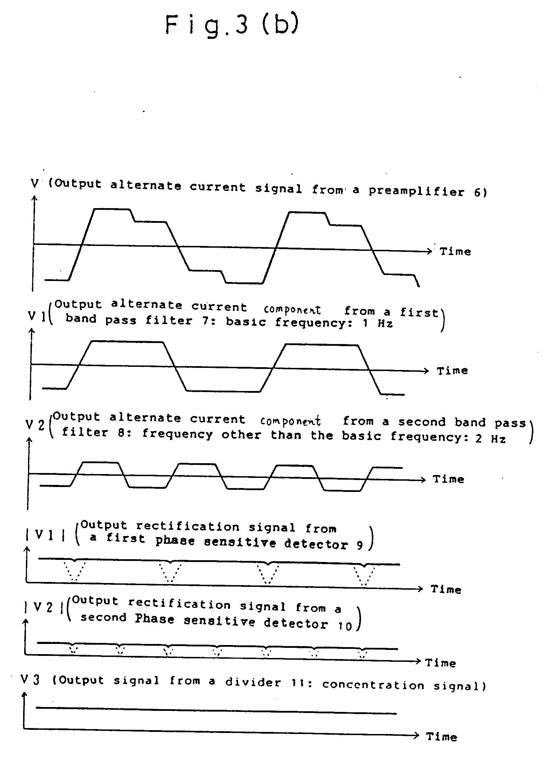

The signal treatment circuit D is constructed as shown by the block diagram in Fig. 2. The construction of this signal treatment circuit D is below described in detail with reference to figure 3(a), which is a diagram showing an input signal, and figure 3(b) which is a timing chart showing signals in different parts of the circuit.

A detected signal v from the detector 3 is supplied to the signal treatment circuit D. The detected signal v, as shown in figure 3(a), has a form, in which an alternating current signal $v_2$ (an alternating current component resulting from the change of the strength of the light emitted from the light source 1) having the modulation frequency (2 Hz) is additively superposed to an alternating current signal v1 (an alternating current component corresponding to the absorption of energy by the absorptive gas component contained in the sample gas) having the basic frequency (1Hz) and forming the signal to be measured properly.

It will be understood that the characteristics of the optical system, such as the light efficiency of the light source 1, the transmissivity of a transmission window of the gas-passing cell 2 and the sensitivity of the detector, have an equal influence upon both alternating current signals v1 and v2. Specifically, any changes of these characteristics result in changes of the alternating current signals v1 and v2 at the same ratio.

The signal treatment circuit D shown in figure 2 comprises a preamplifier 6 for amplifying the detected signal v which is supplied to an input terminal a of the signal treatment circuit. The preamplifier 6 provides an output signal V (= V1 + V2) comprising a superposition of an alternating current signal V2 obtained by amplifying the alternating current component v2 and having the modulation frequency (2 Hz) and an alternating current component V1 obtained by amplifying the alternating current component v1 and having the basic frequency (1 Hz). The signal treatment circuit further comprises a first band pass filter 7 (of which the central frequency is 1 Hz) for selectively detecting the alternating current component V1 having the basic frequency (1 Hz) from the output signal V of the preamplifyer 6, a second band pass filter 8 (of which the central frequency is 2 Hz) for selectively detecting the alternating current component V2 having the modulation frequency (2 Hz) from the output signal V of the preamplifyer 6, a first phase sensitive detector 9 for synchronously rectifying the alternating current component V1 detected by the first band pass filter 7 on the basis of the gas change-over signal supplied from the controller F through an input terminal b to obtain a first rectification signal |V1|, a second phase sensitive detector 10 for synchronously rectifying the alternating current component V2 detected by the second band pass filter 8 on the basis of the lightmodulation signal supplied from said controller F through a third input terminal C to obtain a second rectification signal |V2| , and a divider 11 for dividing said first rectification signal |V1| by said second rectification signal |V2|. An output signal V3 from the divider 11 is supplied to an output terminal d and displayed as a concentration value of the gas component to be measured which is contained in the sample gas.

Since the influences of the various kinds of span-drift causing factor upon the characteristics of the optical system tend to change the respective rectification signals |V1| and |V2| equally (at the same ratio), these influences are cancelled by forming the quotient of the rectification signals and are thus surely and effectively eliminated from the output signal V3 which is delivered from the divider 11 and forms the final measured concentration signal. Accordingly, even though various kinds of secular change, such as the change of light quantity due to the change of the voltage applied to the light source 1 (the voltage delivered by the constant voltage source 4), the change of the environmental temperature, the deterioration of the light source 1 itself and the like, the change of the transmissivity due to stain of the transmission window of the gas-passing cell 2, and the deterioration of the sensitivity of the detector 3 itself, have an influence on the rectified signal |V1| , they do not cause a change (span drift) of the signal supplied from the divider 11 of the signal treatment circuit D to the display E, so that the display E can always display the value corresponding to the actual concentration of the gas to be measured in the sample gas with high accuracy.

The two band pass filters 7,8, the phase sensitive detectors 9,10 and the divider 11 are collectively referred to as correcting means X.

Although the ratio of the modulation frequency to the basic frequency is 2:1 in the described embodiment, a different ratio may optionally be selected. However, in the case where this ratio is relatively small, it is important for maintaining the operational accuracy that the modulation frequency is an even numbered multiple or an even numbered fraction of the basic frequency and that phase sensitive detectors 9,10 are provided on the output side of the band pass filters 7,8, as above described. On the other hand, if the frequency ratio is relatively large (for example about 5:1 or more), the modulation frequency need not be an integral multiple or an integral fraction of the basic frequency, and it is not necessary to use a phase sensitive detector.

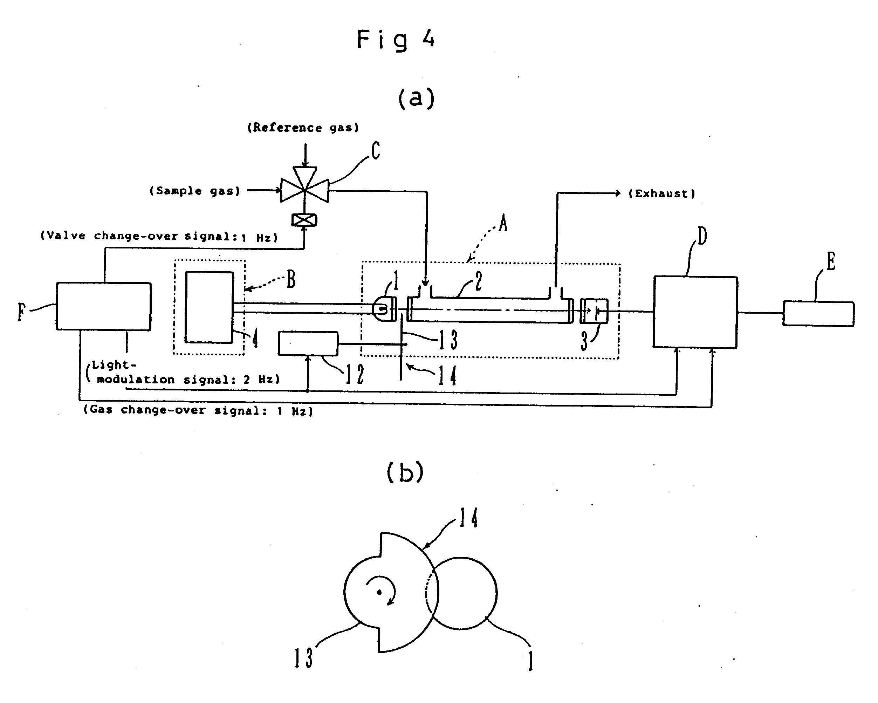

Figure 4 shows another embodiment of the invention, in which the electric means for modulating the light beam emitted from the light source 1 is replaced by mechanical means. In this embodiment, the power source circuit B is formed merely by the constant-voltage power source 4, as shown in figure 4(a), and there is no voltage-modulation circuit interposed between the power source and the light source 1, so that the light source is caused to constantly emit a light beam having the appointed strength. Chopper means 14 are provided for partially chopping the light emitted from the light source 1 at the modulation frequency. The chopper means 14 comprise a driving motor 12 and a blade member 13 which is rotated by the motor 12. As is shown in the enlarged front view in figure 4(b), the blade member 13 is formed by a single blade which is so shaped that the strength of the light supplied to the gas-passing cell 2 may be increased by passing all of the light emitted from the light source 1 during one half rotation of the blade member 13 and reduced by cutting off a part of the light emitted from the light source during the other half rotation of the blade member 13. In order to carry out the light-modulation at the modulation frequency (2 Hz) which is two times the basic frequency (1Hz), the motor 12 is rotated at the frequency of 2 Hz. However, the rotation frequency of the motor 12 is dependent upon the desired modulation frequency and the shape of the blade member 13. Accordingly, if a blade member with another shape, for example of the two-blade type, is used, it is sufficient to rotate the motor 12 at a frequency of 1 Hz in order to obtain the modulation frequency of 2 Hz.

Since, except for the differences described above, the construction of the embodiment according to figure 4 is substantially the same as that of the embodiment shown in figures 1 to 3, a description of the other details of the embodiment shown in figure 4 is omitted.

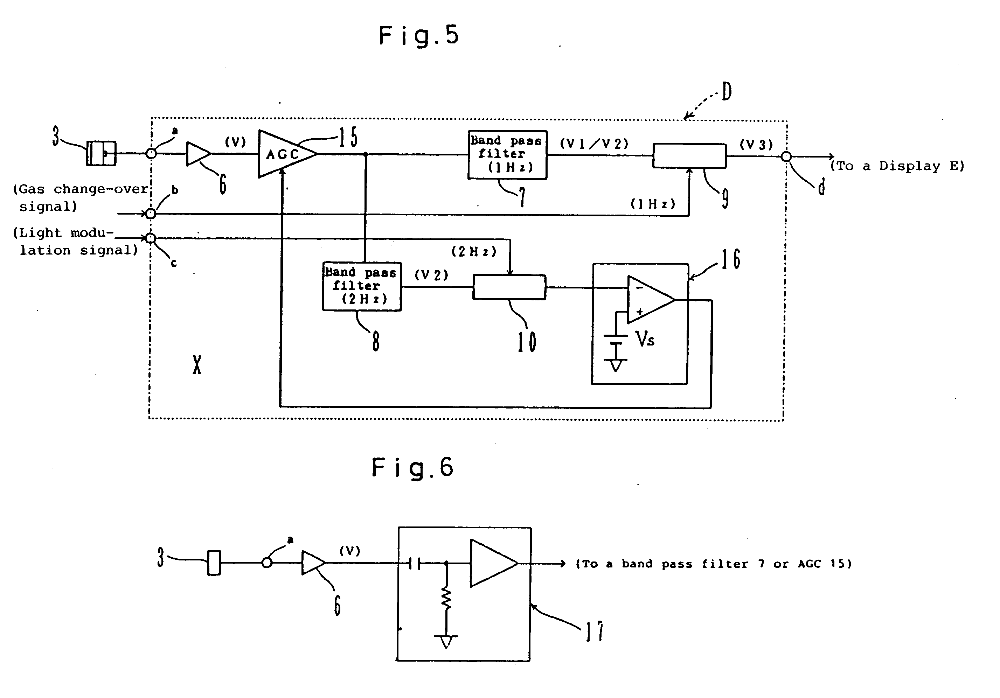

Figure 5 shows a modification of the signal treatment circuit D shown in figure 2. In the embodiment according to figure 5, the first rectification signal |V1| provided by the first phase sensitive detector 9 is not directly divided by the second rectification signal |V2| provided by the second phase sensitive detector 10 by means of a divider, but instead, the correcting means X comprise an auto gain controller 15 (hereinafter referred to as AGC) disposed immediately after the preamplifier 6, and a comparator 16 receiving a reference voltage $V_s$ is disposed between the AGC 15 and the second phase sensitive detector 10 for feedback-controlling the AGC 15 so that the rectification signal from the second phase sensitive detector 10 always held at the appointed value $V_s$, whereby an operation (indirect division) equivalent to that of the embodiment according to figure 2 is achieved.

The construction of the signal treatment circuit D in the above described embodiments corresponds to the case where a detector, such as a pneumatic detector, which delivers a signal consisting merely of an alternating current component is used as the detector 3. In cases where the detector 3 is a type of detector, such as a thermopile detector, which delivers a signal representing an absolute value and comprising a superposition of an alternating current component and a direct current component, it is sufficient to dispose an alternating current amplifier 17 immediately after the preamplifier 6 to remove the direct current component and then apply the signal treatment in the same manner as above described, as is shown in figure 6. In this way, the gas analyzer according to the invention can be adapted to any type of detector.

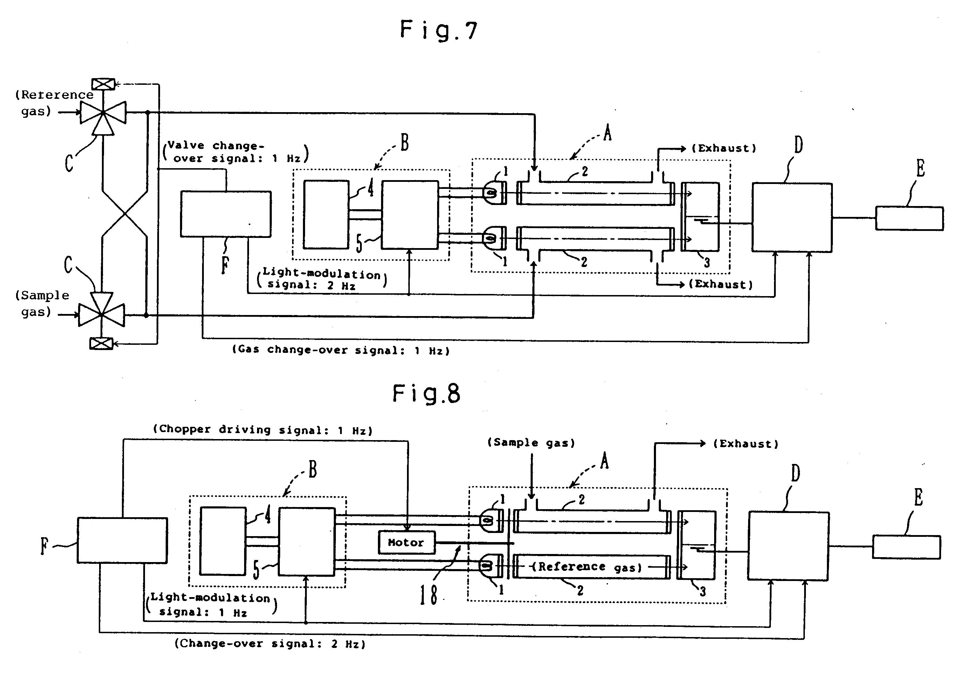

Figure 7 shows another embodiment in which the present invention is applied to a gas analyzer of the so called double-cell cross-flow type, wherein two sets of light source 1 and gas-passing cell 2 are provided and the sample gas and the reference gas are simultaneously introduced each into one of the two gas-passing cells 2 in an alternating manner by controlling distributors C comprising two change-over valves. In other respect, the construction of this embodiment is the same as that of the embodiment shown in figures 1 to 3.

Figure 8 shows another preferred embodiment in which the invention is applied to a gas analyzer of the double-cell type employing a chopping method instead of a cross flow method. In this gas analyzer, there are provided two light sources 1, a gas-enclosing cell 2' and a gas-passing cell 2, and the reference gas is enclosed in the gas-enclosing cell 2' while the sample gas is continuously supplied to the gas-pass cell 2, and a chopper 18 (usually of the two-blade type) alternately cuts off the eight beams emitted from the two light sources and passing through the gas-enclosing cell and the gas-passing cell, respectively. Thus, the chopper 18 exhibits a function corresponding to that of the gas distributor C in the embodiments described above (wherein the cross flow method is employed). In addition, when the chopper is rotated at a rotation frequency of 1 Hz in this embodiment, it is necessary that, in contrast to the embodiments previously described, the difference between the optical energies of the light which passed through the sample gas passing cell and the light which passed through the reference gas enclosing cell is detected at a frequency of 2 Hz while the light-modulation is carried out at a frequency of 1 Hz, and the characteristics of the band pass filters 7 and 8 are mutually exchanged as compared to the characteristics in the previous embodiments. In other respects, this embodiment has the same construction as the embodiments described above.

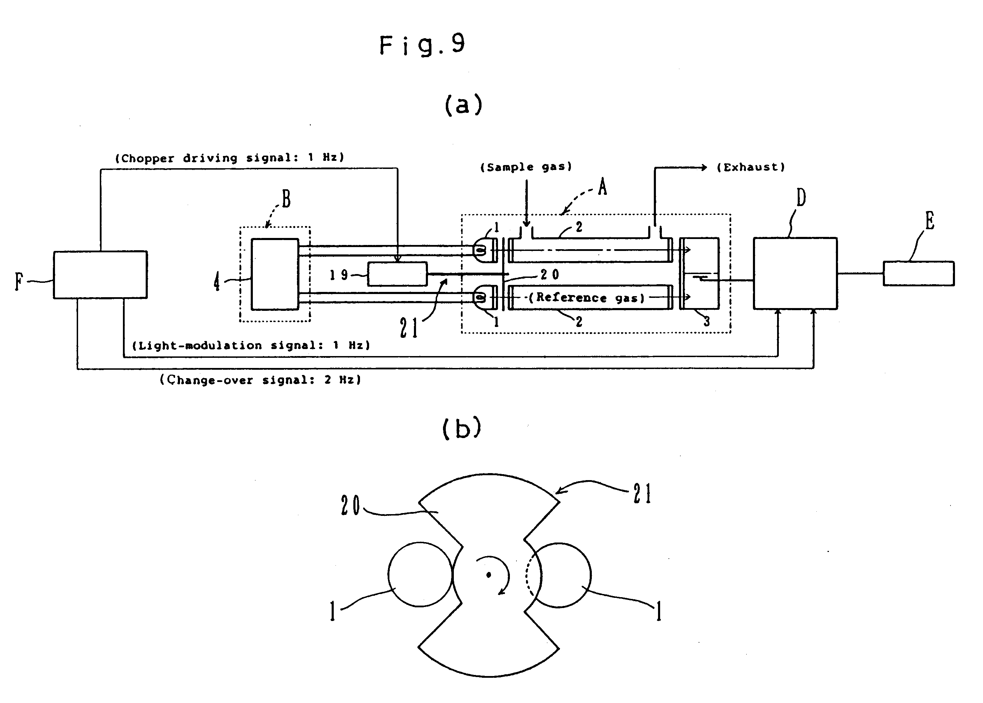

Figures 9(a) and (b) show a modification of the double-cell type gas analyzer employing the chopping method.

With the gas analyzer of this type, the modulation of the light beams is achieved mechanically by means of the chopper, and the power source circuit B comprises merely the constant-voltage source 4, so that the light sources continuously emit light beams having an appointed strength. Chopper means 21 are disposed between the two light sources 1 on the one hand and the gas-passing cell and the gas-enclosing cell 2' on the other hand. The chopper means 21 comprise a blade member 20 and a motor 19 for rotating the blade member. The blade member has such a shape that its function is similar to the function described in conjunction with figure 4. As is shown in an enlarged front view in figure 9(b), the blade member 20 is of the two-blade type and has an asymmetric shape, so that, upon rotation of the blade member, both light beams are cyclically and interleavingly changed-over from an increased light quantity state, in which all of the light is transmitted, via a lightless state, in which all of the light is cut off, to a reduced light quantity state, in which a part of the light is cut off. However, the blade member 20 may have a different shape of various kinds, depending upon the relation between the modulation frequency and the frequency of rotation of the motor 19. In other respects, the construction of the embodiment shown in figure 9 is the same as that of the embodiment according to figures 1 to 3.

## Claims

1. A gas analyzer, in which light emitted from a light source means (1) passes periodically through a reference gas and a sample gas at an appointed basic fequency and is detected by detector means (3) the output signal of which comprises an alternating current component corresponding to the difference between the energies of the light which has passed through the reference gas and the sample gas, respectively, the amplitude of said alternating current component indicating the concentration of a gas component contained in the sample gas, **characterized** by means (5;14;21) for modulating the intensity of the light emitted from said light source means (1) at a modulation frequency other than said basic frequency, and by a signal treatment circuit (D) provided with correction means (X) for separately detecting from the output signal of said detector means (3) a first rectification signal ( $|V1|$ ) corresponding to the alternating current component having said basic frequency and a second rectification signal ( $|V2|$ ) corresponding to an alternating current component having said modulation frequency and for correcting said first rectification signal on the basis of the second rectification signal, thereby compensating errors of measurement which influence said first and second rectification signals in like proportion.

2. A gas analyzer as set forth in claim 1, wherein said correction means (X) comprise a divider (11) for dividing said first rectification signal ( $|V1|$ ) by said second rectification signal ( $|V2|$ ).

3. A gas analyzer as set forth in claim 1, wherein said correction means (X) comprise adjustable gain amplifying means (15) for amplifying the output signal of said detection means (3), the gain of said amplifying means (15) being feedback-controlled on the basis of said second rectification signal ( $|V2|$ ) so that the second rectification signal is held constant.

4. A gas analyzer as set forth in any of the claims 1 to 3, wherein the ratio of the modulation freqeuncy to the basic frequency is an even number or the reciprocal of an even number.

5. A gas analyzer as set forth in claim 4, wherein said correction means (X) comprise phase sensitive detectors (9,10) for rectifying the alternating current components detected from the output signal of said detector means (3).

6. A gas analyzer as set forth in any of the preceding claims, in which said modulating means comprise a voltage modulation circuit (5) for changing the operating power supply to said light source (1).

7. A gas analyzer as set forth in any of the claims 1 to 5, wherein said modulating means comprise chopper means (14,21) for partially chopping the light transmitted from said light source means (1) to said detector means (3).

8. A gas analyzer as set forth in anyone of the preceding claims, wherein separate cells (2,2') are provided for said sample gas and said reference gas, said light source means comprise two light sources (1) for transmitting light through the sample gas cell and the reference gas cell, respectively, and chopper means (18;21) are provided for cutting off the light beams emitted from the two light sources.

9. A gas analyzer as set forth in claims 7 and 8, wherein said chopper means (21) comprise a rotating blade member (20) which is so shaped, that, upon rotation of said blade member, both light beams are cyclically and interleavingly changed-over from an increased light quantity state, in which all of the light is transmitted, via a lightless state, in which all of the light is cut-off, to a reduced light quantity state, in which a part of the light is cut-off.

## Patentansprüche

1. Gasanalysator, bei dem von einer Lichtquelleneinrichtung emittiertes Licht periodisch mit einer gegebenen Basisfrequenz durch ein Bezugsgas und ein Probengas läuft und mit Detektormitteln (3) gemessen wird, deren Ausgangssignal eine Wechselstromkomponente entsprechend der Differenz zwischen den Energien des Lichts, das das Bezugsgas und das Probengas durchquert hat, enthält, wobei die Amplitude der Wechselstromkomponente die Konzentration einer in dem Probengas enthaltenen Gaskomponente angibt, **gekennzeichnet** durch Mittel (5;14;21) zum Modulieren der Intensität des von der Lichtquelleneinrichtung (1) emittierten Lichtes mit einer von der Basisfrequenz verschiedenen Modulationsfrequenz, und durch eine Signalverarbeitungsschaltung (D), die mit Korrekturmitteln (X) versehen ist, zum getrennten Detektieren eines der Wechselstromkomponente mit der Basisfrequenz entsprechenden ersten Gleichrichtsignals (|V1|) und eines der Wechselstromkomponente mit der Modulationsfrequenz entsprechenden zweiten Gleichrichtsignals (|V2|) aus dem Ausgangssignal der Detektormittel (3) und zum Korrigieren des ersten Gleichrichtsignals auf der Basis des zweiten Gleichrichtsignals, wodurch Meßfehler kompensiert werden, die die ersten und zweiten Gleichrichtsignale in gleicher Proportion beeinflussen.

2. Gasanalysator nach Anspruch 1, bei dem die Korrekturmittel (X) einen Dividierer (11) zum Dividieren des ersten Gleichrichtsignals (|V1|) durch das zweite Gleichrichtsignal (|V2|) umfassen.

3. Gasanalysator nach Anspruch 1, bei dem die Korrekturmittel (X) eine Verstärkereinrichtung (15) mit einstellbarer Verstärkung zum Verstärken des Ausgangssignals der Detektormittel (3) umfassen und die Verstärkung der Verstärkereinrichtung (15) anhand des zweiten Gleichrichtsignals (|V2|) so geregelt wird, daß das zweite Gleichrichtsignal konstant gehalten wird.

4. Gasanalysator nach einem der Ansprüche 1 bis 3, bei dem das Verhältnis der Modulationsfrequenz zu der Basisfrequenz eine gerade Zahl oder der Kehrwert einer geraden Zahl ist.

5. Gasanalysator nach Anspruch 4, bei dem die Korrekturmittel (X) phasensensitive Detektoren (9,10) zum Gleichrichten der aus dem Ausgangssignal der Detektormittel (3) detektierten Wechselstromkomponenten enthalten.

6. Gasanalysator nach einem der vorstehenden Ansprüche, bei dem die Moduliermittel eine Spannungsmodulationsschaltung (5) zum Ändern der Betriebsspannungsversorgung für die Lichtquelle (1) umfassen.

7. Gasanalysator nach einem der Ansprüche 1 bis 5, bei dem die Moduliermittel Unterbrechermittel (14,21) zum teilweisen Unterbrechen des von der Lichtquelleneinrichtung (1) zu den Detektormitteln übertragenen Lichtes umfassen.

8. Gasanalysator nach einem der vorstehenden Ansprüche, bei dem getrennte Zellen (2,2') für das Probengas und das Bezugsgas vorgesehen sind und die Lichtquelleneinrichtung zwei Lichtquellen (1) zum Aussenden von Licht durch die Probengaszelle bzw. die Bezugsgaszelle umfaßt und Unterbrechermittel (18;21) zum Unterbrechen der von den beiden Lichtquellen ausgesandten Lichtstrahlen vorgesehen sind.

9. Gasanalysator nach den Ansprüchen 7 und 8, bei dem die Unterbrechermittel (21) ein rotierendes Klingenelement (20) aufweisen, das so geformt ist, daß bei der Drehung des Klingenelements beide Lichtstrahlen zyklisch und verschachtelt von einem Zustand mit erhöhter Lichtmenge, in dem das gesamte Licht durchgelassen wird, über einen lichtlosen Zustand, in dem das gesamte Licht unterbrochen wird, in einen Zustand mit reduzierter Lichtmenge umgeschaltet werden, indem ein Teil des Lichts ausgeblendet wird.

**Revendications**

1. Analyseur de gaz dans lequel la lumière émise par des moyens formant source de lumière (1) traverse périodiquement un gaz de référence et un gaz échantillon à une fréquence de base déterminée et est détectée par des moyens de détection (3) dont le signal de sortie comprend une composante de courant alternatif correspondant à la différence entre les énergies de la lumière ayant traversé respectivement le gaz de référence et le gaz échantillon, l'amplitude de ladite composante de courant alternatif indiquant la concentration d'un composant gazeux contenu dans le gaz échantillon, caractérisé par des moyens (5; 14; 21) pour moduler l'intensité de la lumière émise par lesdits moyens formant source de lumière (1) selon une fréquence de modulation autre que ladite fréquence de base, et par un circuit de traitement de signaux (D) muni de moyens de correction (X) pour détecter, de façon séparée à partir du signal de sortie desdits moyens de détection (3), un premier signal de redressement (|V1|) correspondant à la composante de courant alternatif présentant la même fréquence de base, et un second signal de redressement (|V2|) correspondant à une composante de courant alternatif présentant ladite fréquence de modulation et pour corriger ledit premier signal de redressement sur la base du second signal de redressement, compensant ainsi, selon la même proportion, les erreurs de mesure qui ont une influence sur les premier et second signaux de redressement.

2. Analyseur de gaz selon la revendication 1, dans lequel lesdits moyens de correction (X) comprennent un diviseur (11) pour diviser ledit premier signal de redressement (|V1|) par ledit second signal de redressement (|V2|).

3. Analyseur de gaz selon la revendication 1, dans lequel lesdits moyens de correction (X) comprennent des moyens d'amplification de gain réglables (15) pour amplifier le signal de sortie desdits moyens de détection (3), le gain desdits moyens d'amplification de gain (15) étant commandé par rétroaction sur la base dudit second signal de redressement (|V2|) de manière que le second signal de redressement soit maintenu constant.

4. Analyseur de gaz selon l'une quelconque des revendications 1 à 3, dans lequel le rapport entre la fréquence de modulation et la fréquence de base est un nombre pair ou la réciproque d'un nombre pair.

5. Analyseur de gaz selon la revendication 4, dans lequel lesdits moyens de correction (X) comprennent des détecteurs sensibles à la phase (9, 10) pour redresser les composantes de courant alternatif détectées à partir du signal de sortie desdits moyens de détection (3).

6. Analyseur de gaz selon l'une quelconque des revendications précédentes, dans lequel lesdits moyens de modulation comprennent un circuit de modulation de tension (5) pour modifier l'alimentation en puissance de fonctionnement de ladite source de lumière (1).

7. Analyseur de gaz selon l'une quelconque des revendications 1 à 5, dans lequel lesdits moyens de modulation comprennent des moyens d'interruption périodique (21) pour interrompre périodiquement et partiellement la lumière transmise par lesdits moyens formant source de lumière (1) auxdits moyens de détection (3).

8. Analyseur de gaz selon l'une quelconque des revendications précédentes, dans lequel des cellules séparées (2, 2') sont prévues pour ledit gaz échantillon et ledit gaz de référence, lesdits moyens formant source de lumière comprenant deux sources de lumière (1) pour transmettre respectivement la lumière à travers la cellule à gaz échantillon et la cellule à gaz de référence, et des moyens d'interruption périodique (18; 21) sont prévus pour interrompre les faisceaux lumineux émis par les deux sources de lumière.

9. Analyseur de gaz selon les revendications 7 et 8, dans lequel lesdits moyens d'interruption périodique (21) comprennent une pale tournante (20) qui est conformée de manière que lors de sa rotation, les deux faisceaux lumineux soient modifiés cycliquement et par entrelacement depuis un état où la quantité de lumière est augmentée, dans lequel toute la lumière est transmise, par l'intermédiaire d'un état sans lumière dans lequel toute la lumière est coupée, vers un état à quantité réduite de lumière dans lequel une partie de la lumière est coupée.

# Fig.1

(Reference gas)

(Sample gas)

C

(Exhaust)

(Valve change-over signal : 1 Hz)

B

A

D

E

F

4

5

1

2

3

(Light-modulation signal : 2 Hz)

(Gas change-over signal : 1 Hz)

# Fig.2

3

a

(V)

Band pass filter (1 Hz)

(V 1)

(|V 1|)

(V 3)

(To the display E)

6

7

9

|V 1|／|V 2|

d

(Gas change-over signal)

b

(1 Hz)

11

(Light-modula-tion signal)

c

(2 Hz)

8

10

X

Band pass filter (2 Hz)

(V 2)

(|V 2|)

EP 0 296 354 B1

# Fig.3 (a)

Gas within a cell

Strength of a light
emitted from a light source

Sample gas    Sample gas

Reference
gas

Weak Strong Weak Strong Weak Strong Weak Strong

Time

Time

v1 (1 Hz)

v2 (2 Hz)

Time

Time

Overlap

v (Output signal from the detector 3)

Time

EP 0 296 354 B1

# Fig.3 (b)

V (Output alternate current signal from a preamplifier 6)

V 1 $\left(\begin{array}{l}\text{Output alternate current } \textit{component} \text{ from a first} \\ \text{band pass filter 7: basic frequency: 1 Hz}\end{array}\right)$

V 2 $\left(\begin{array}{l}\text{Output alternate current } \textit{component} \text{ from a second band pass} \\ \text{filter 8: frequency other than the basic frequency: 2 Hz}\end{array}\right)$

| V 1 | $\left(\begin{array}{l}\text{Output rectification signal from} \\ \text{a first phase sensitive detector 9}\end{array}\right)$

| V 2 | $\left(\begin{array}{l}\text{Output rectification signal from a} \\ \text{second Phase sensitive detector 10}\end{array}\right)$

V 3 (Output signal from a divider 11: concentration signal)

Fig 4

(a)

(Reference gas)

(Sample gas)

C

(Valve change-over signal: 1 Hz)

B

4

F

(Light-modulation signal: 2 Hz)

(Gas change-over signal: 1 Hz)

A

1

2

3

13

14

12

D

(Exhaust)

E

(b)

14

1

13

# Fig.5

3

(Gas change-over signal)

(Light modu-lation signal)

a

b

c

(V)

6

AGC

15

Band pass filter (1Hz)

7

(V1/V2)

(1Hz)

9

(V3)

d

(To a Display E)

D

Band pass filter (2Hz)

8

(V2)

(2Hz)

10

16

Vs

X

# Fig.6

3

a

6

(V)

(To a band pass filter 7 or AGC 15)

17

EP 0 296 354 B1

## Fig.7

EP 0 296 354 B1

(Reference gas)

(Valve change-over signal: 1 Hz)

B

A

(Exhaust)

D

E

C

4

1

2

5

1

2

3

(Light-modulation signal: 2 Hz)

F

(Sample gas)

(Exhaust)

(Gas change-over signal: 1 Hz)

## Fig.8

(Chopper driving signal: 1 Hz)

(Sample gas)

(Exhaust)

B

A

D

E

F

4

Motor

1

2

5

18

1

(Reference gas)

2

3

(Light-modulation signal: 1 Hz)

(Change-over signal: 2 Hz)

15

# Fig.9

## (a)

(Chopper driving signal: 1 Hz)

(Sample gas)

(Exhaust)

A

B

F

4

19

20

21

1

2

(Reference gas)

1

2

3

D

E

(Light-modulation signal: 1 Hz)

(Change-over signal: 2 Hz)

## (b)

20

21

1

1

EP 0 296 354 B1